# EUROPÄISCHE PATENTANMELDUNG

(11) **EP 1 488 877 A1**
(43) Veröffentlichungstag der Anmeldung: **22.12.2004**
(21) Anmeldenummer: 04014163.2
(22) Anmeldetag: 17.06.2004
(51) Int. Cl.: B23B 45/00, F16D 1/108, F16C 1/08

(54) **Schnellkupplung zur werkzeugfreien Verbindung einer in einer Schutzhülle konzentrisch laufenden Antriebswelle**

(30) Priorität: 20.06.2003 DE 20309523 U
(71) Anmelder: Feist, Gerhard, 49201 Dissen (DE)
(72) Erfinder: Feist, Gerhard, 49201 Dissen (DE)
(74) Vertreter: Dantz, Jan Henning

(57) **Zusammenfassung**

Gegenstand der Erfindung ist eine Schnellkupplung zur werkzeugfreien Verbindung einer, in einer Schutzhülle laufenden Antriebswelle mit einem Werkzeughalter, wobei die Schutzhülle mit dem Werkzeughalter über die einrastende Schnellkupplung verbunden wird und die Antriebswelle, innerhalb der selben selbsttätig eine Steckverbindung zur Weiterführung des Antriebs zum Werkzeug eingeht, wobei die Besonderheit der Erfindung darin besteht, dass die ineinander gesteckten Kupplungsteile (9 und 10) über Kugeln (12), die von einer Hülse (14), die gegen den Druck einer Feder axial verschiebbar ist, ein- bzw. ausgekuppelt werden.

## Beschreibung

Die Erfindung betrifft eine Schnellkupplung zur werkzeugfreien Verbindung einer, in einer Schutzhülle konzentrisch laufenden Antriebswelle nach dem Oberbegriff des Anspruchs 1.

Schnellkupplungen der genannten Art werden vielfach dort verwendet, wo vorzugsweise von einer Antriebswelle verschiedene austauschbare Werkzeuge oder Aggregate angetrieben werden. Ein großes Einsatzfeld ist zum Beispiel im Bereich des Werkzeugbaus zur Nachbearbeitung von Werkzeugen, Gesenken, Formen und dergleichen zu finden. Hier sind die Schnellkupplungen vielfach an biegsamen Wellen zu finden, die zum Antrieb von Werkzeughaltern dienen, die unterschiedliche Fräs-, Feil-, oder Polierwerkzeuge und ähnliches aufnehmen und welche weitgehend manuell geführt werden.

Bei den bekannten Schnellkupplungen wird beim Verbinden die Kupplungshälfte des Werkzeugträgers auf eine antriebsseitige Hülse geschoben, bis über eine mit Schenkeln versehene Flachformfeder eine Einrastung erfolgt. Innerhalb dieser Kupplung greift gleichzeitig die Antriebswelle, nach der Art eines Schraubenziehers, in den Schlitz des zum Werkzeug weiterführenden Teils der Antriebswelle. Zum Lösen der Schnellkupplung werden die Schenkeln der Flachformfeder zusammengedrückt und die Kupplungshälften werden auseinander gezogen.

Die Schenkeln der Flachformfeder stehen, um sie bedienen zu können, gegenüber dem Durchmesser der Schnellkupplung vor, dieses stört die Griffigkeit der Handhabung und führt immer wieder, bei sorgloser Bedienung, zu Verletzungen am Handgelenk des Bedieners. Die Flachformfeder kann sehr leicht von ihrem Sitz entfernt werden und geht daher sehr leicht, unbeabsichtigt verloren, sie ist dann wegen ihrer geringen Größe, nur sehr schwer oder gar nicht wiederzufinden, das Werkzeug fällt aus, falls keine Ersatzfeder vorhanden ist. Wegen der relativ schwachen Stabilität fällt die Flachformfeder auch öfter durch Überdehnung aus.

Aufgabe der Erfindung ist es, eine Schnellkupplung der gattungsgemäßen Art zu schaffen, welche die Arbeit mit dieser Schnellkupplung erleichtert, eine bequeme Handhabung des Werkzeugshalters ermöglicht und Verletzungsgefahren sowie Ausfälle vermeidet.

Diese Aufgabe wird erfindungsgemäß gelöst durch die Merkmale des Patentanspruches 1.

Eine derartige Schnellkupplung weist keine vorstehenden Teile mehr auf und gestattet aufgrund der stabilen Ausführung eine leichte und störungsfreie Handhabung, außerdem ist ein Verlust von Teilen der Schnellkupplung ausgeschlossen.

Da keinerlei vorstehenden Teile vorhanden sind, ist auch die Verletzungsgefahr bei der Handhabung der Schnellkupplung beseitigt.

Dabei wird der Vorteil beibehalten, dass die sich drehenden Teile von den Kupplungsteilen völlig getrennt sind, so dass sich diese Teile nicht gegenseitig negativ beeinflussen können.

Die erfindungsgemäße Schnellkupplung wurde aus dem Bereich hydraulischer oder pneumatischer Anwendungen, insbesondere für Schlauchverbindungen, so umgestaltet und weiterentwickelt, dass sie in mechanischen Einsatzfeldern, mit einem trennbaren Durchtrieb versehen, eingesetzt werden kann.

Die Erfindung wird nachstehend an einem Beispiel beschrieben und in den Zeichnungen dargestellt.

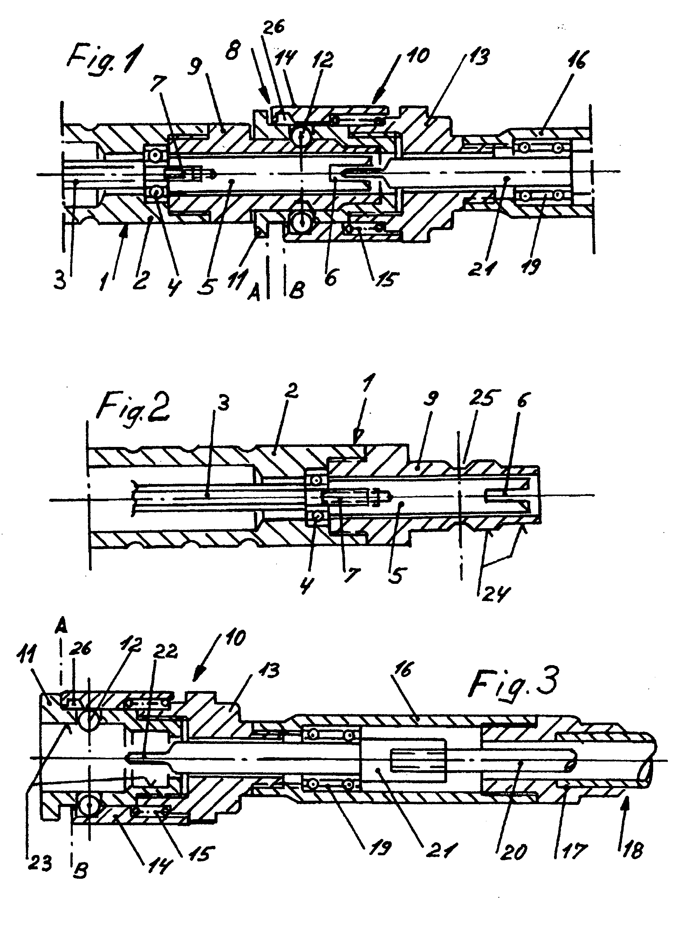

- Fig. 1: zeigt eine zusammengesetzte Schnellkupplung.
- Fig. 2: zeigt den Werkzeughalter mit einer Kupplungsseite.
- Fig. 3: zeigt den Endbereich einer biegsamen Welle mit einer Kupplungsseite.

Ein Werkzeughalter (1), bestehend aus einem Griffstück (2), einer das Griffstück (2) konzentrisch durchlaufenden profilierten Antriebswelle (3), z.B. ein Sechskant-Profil, einem Lager (4), einem mit der Antriebswelle (3), über eine Schraubverbindung (7) verbundenen Wellenstück (5), welches an einer Stirnseite einen Schlitz (6) trägt. Am äußeren Ende des Griffstücks (2), ist in bekannter Weise, ein nicht näher dargestelltes Spannstück mit einem drehbaren Werkzeug angeordnet.

An der inneren Stirnseite des Griffstücks (2) ist eine Kupplungsseite (9) angeordnet. Die Kupplung (8) besteht aus der einteiligen Kupplungsseite (9) und der mehrteiligen Kupplungsseite (10), letztere besteht im wesentlichen aus dem Kugelträger (11), mit den Kugeln (12), dem Anschlussstück (13), der verschiebbaren Hülse (14) und der Druckfeder (15).

Mit dem Anschlussstück (13) ist die Kupplungsseite (10) fest mit dem Endstück (16) des zu einer Biegsamen Welle (18) gehörenden Schutzschlauchs (17) verschraubt. Die biegsame Welle (18) umfasst ferner die relevanten Antriebsteile, wie Wellenseele (20) und Anschlussstück (21). Im Endstück (16) ist mittels des Lagers (19), das mit der antreibenden Wellenseele (20) fest verbundene Anschlussstück (21) gelagert, welches am Ende mit einem symmetrisch angeflachtem Steg (22) ausgestattet ist.

Zum Verbinden des Werkzeughalters (1) mit der Biegsamen Welle (18) wird die Kupplungsseite (9) mit ihren zylindrischen Zapfen (24), bei geringem Spiel, manuell in die Bohrungen (23) des Kugelträgers (11) gesteckt, die Hülse (14) wird hierbei in die Stellung (B) gebracht. Während des Zusammensteckens weichen die Kugeln (12) in die umlaufende Nut (26) aus.

Nach dem Ineinanderstecken wird die Hülse (14) losgelassen, bzw. freigegeben, sie springt durch den Druck der Feder (15) in die Stellung (A), die Kugeln (12) werden hierbei in die Nut (25) gedrückt. Der Kupplungsvorgang ist abgeschlossen.

Während des Kuppelns wird gleichzeitig eine Steckverbindung zwischen dem antreibenden Anschlussstück (21), mit dem Steg (22) und dem anzutreibenden Wellenstück (5), mit dem Schlitz (6) hergestellt.

Die Verbindung zum Antrieb eines vom Werkzeughalter (1) getragenen Werkzeugs ist somit hergestellt. Die Kupplungsseiten (9) und (10) sind gegeneinander verdrehbar.

Zum Entkuppeln wird die Hülse (14) wieder in die Stellung (B) gebracht, dann werden die Kupplungsseiten (9) und (10) auseinander gezogen.

Wie aus den Zeichnungen deutlich hervorgeht, durchlaufen die im gekuppelten Zustand ineinander greifenden Antriebsteile, nämlich das Wellenstück (5) und das Anschlussstück (21), die miteinander verbundenen Kupplungsseiten (9 und 10) konzentrisch und berührungslos.

## Patentansprüche

1. Schnellkupplung zur werkzeugfreien Verbindung einer, in einer Schutzhülle laufenden Antriebswelle mit einem Werkzeughalter, wobei die Schutzhülle mit dem Werkzeughalter über die einrastende Schnellkupplung verbunden wird und die Antriebswelle, innerhalb derselben, selbsttätig eine Steckverbindung zur Weiterführung des Antriebs zum Werkzeug eingeht, **dadurch gekennzeichnet, dass** die ineinander gesteckten Kupplungsseiten (9) und (10) über Kugeln (12), die von einer Hülse (14), die gegen den Druck einer Feder axial verschiebbar ist, ein- bzw. ausgekuppelt werden.

2. Schnellkupplung nach Anspruch 1, **dadurch gekennzeichnet, dass** die Kugeln (12) im gekuppelten Zustand, in eine radial umlaufende Nut (25) des Kupplungsteil (9) eingreifen.

3. Schnellkupplung nach den Ansprüchen 1 und 2, **dadurch gekennzeichnet, dass** die Kugeln (12), zum Auskuppeln, in eine radial umlaufende Nut (26) der verschiebbaren Hülse (14) ausweichen.

4. Schnellkupplung nach den Ansprüchen 1 - 3, **dadurch gekennzeichnet, dass** die Kupplungsseiten (9) und (10) radial gegeneinander verdrehbar sind.

5. Schnellkupplung nach den Ansprüchen 1 - 4, **dadurch gekennzeichnet, dass** nur eine Kugel (12) verwendet wird.

6. Schnellkupplung nach den Ansprüchen 1 - 5, **dadurch gekennzeichnet, dass** die Kugeln (12) durch Profile ersetzt werden können.

7. Schnellkupplung nach einem der vorhergehenden Ansprüche, **dadurch gekennzeichnet, dass** die miteinander verbundenen Kupplungsseiten (9, 10) von den ineinander greifenden Antriebsteilen, nämlich dem Wellenstück (5) und dem Anschlussstück (21), konzentrisch und berührungslos durchtreten sind.
